# EUROPÄISCHE PATENTSCHRIFT

(11) **EP 3 277 494 B1**
(45) Veröffentlichungstag und Bekanntmachung des Hinweises auf die Patenterteilung: **13.03.2019**
(21) Anmeldenummer: 16712832.1
(22) Anmeldetag: 24.03.2016
(51) Int. Cl.: B31F 1/28, G01B 11/06

(54) **VORRICHTUNG ZUR BESTIMMUNG DER QUALITÄT EINER WELLPAPPE-BAHN**
DEVICE FOR DETERMINING THE QUALITY OF A CORRUGATED BOARD WEB
DISPOSITIF DE DÉTERMINATION DE LA QUALITÉ D'UNE BANDE DE CARTON ONDULÉ

(30) Priorität: 02.04.2015 DE 102015205994
(43) Veröffentlichungstag der Anmeldung: 07.02.2018
(73) Patentinhaber: BHS Corrugated Maschinen- und Anlagenbau GmbH, 92729 Weiherhammer (DE)
(72) Erfinder: RUHLAND, Karl, 92536 Pfreimd (DE); KRAUS, Helmut, 92442 Wackersdorf (DE); DUSCHNER, Christian, 92706 Luhe-Wildenau (DE)
(74) Vertreter: Rau, Schneck & Hübner Patentanwälte Rechtsanwälte PartGmbB
(86) Internationale Anmeldenummer: PCT/EP2016/056543
(87) Internationale Veröffentlichungsnummer: WO 2016/156199

(56) Entgegenhaltungen:
- EP-A1- 1 101 601
- EP-A1- 2 048 494
- US-A- 4 800 286
- US-A- 5 581 353

## Beschreibung

Die Erfindung betrifft eine Vorrichtung zur Bestimmung der Qualität einer mindestens eine Deckbahn und mindestens eine Wellbahn aufweisenden, bewegten Wellpappe-Bahn. Die Erfindung richtet sich außerdem auf eine Anlage zur Herstellung einer mindestens einseitig kaschierten Wellpappe-Bahn mit mindestens einer derartigen Qualitäts-Bestimmungs-Vorrichtung.

Anlagen zur Herstellung von Wellpappe-Bahnen sind aus dem Stand der Technik allgemein bekannt. Aufgrund von Störungen, Fehlern oder dergleichen kann es vorkommen, dass die Qualität der erzeugten Wellpappe-Bahn nicht den Soll-Vorgaben entspricht. Dies kann zu Problemen bei der späteren Bearbeitung der Wellpappe-Bahn führen.

Aus der EP 1 101 601 A1 ist eine gattungsgemäße Qualitäts-Bestimmungs-Sensoranordnung bekannt, die im Stande ist, die Qualität von Seitenrändern, einer Längsrillung und/oder eines Längsschnitts einer Wellpappebahn zu erfassen.

Die EP 2 048 494 A1 offenbart eine Vorrichtung zur Erfassung der Formatgenauigkeit einer Wellpappebahn. Sie ist im Stande, relevante Breitenmaße einer Wellpappebahn zu erfassen.

Aus der US 5,581,353 ist eine Qualitäts-Bestimmungs-Sensoranordnung als Teil einer Anlage zur Herstellung ein- oder beidseitig kaschierter Wellpappe bekannt. Sie ist in der Lage, das Kaliber einer Wellpappebahn, eine Eindrücktiefe einer Deckbahnrillung und Fehlstellungen zur Optimierung eines Produktionsvorgangs zu detektieren.

Die US 4,800,286 offenbart eine Vorrichtung zum Messen einer Riffelhöhe und einer Riffelhöhenänderung eines Wellmaterials.

Der Erfindung liegt die Aufgabe zugrunde, eine Vorrichtung zur Bestimmung der Qualität einer bewegten Wellpappe-Bahn zu schaffen, die imstande ist, die Qualität der bewegten Wellpappe-Bahn äußerst funktionssicher zu bestimmen. Dabei soll die Vorrichtung insbesondere imstande sein, bereits kleinste Abweichungen der Wellpappe-Bahn von Soll-Vorgaben in Bezug auf die Qualität zu bestimmen bzw. festzustellen. Eine Anlage zur Herstellung einer mindestens einseitig kaschierten Wellpappe-Bahn mit mindestens einer solchen Qualitäts-Bestimmungs-Vorrichtung soll außerdem geliefert werden.

Diese Aufgabe wird erfindungsgemäß durch die in den Ansprüchen 1 und 10 angegebenen Merkmale gelöst. Der Kern der Erfindung liegt darin, dass eine Auswerteeinheit Signale der Qualitäts-Bestimmungs-Sensoranordnung empfängt und auf Basis dieser Signale die Qualität der Wellpappe-Bahn auswertet bzw. bestimmt. Es ist so eine Abweichung der Wellpappe-Bahn von einer Soll-Qualität bzw. Soll-Vorgabe bestimmbar.

Die mindestens eine Führungseinrichtung erlaubt eine besonders exakte Bestimmung der Qualität der Wellpappe-Bahn, da die Wellpappe-Bahn dann bei der Qualitäts-Bestimmungs-Sensoranordnung äußerst exakt geführt ist. Die mindestens eine Führungseinrichtung und die Qualitäts-Bestimmungs-Sensoranordnung sind vorzugsweise unmittelbar benachbart zueinander angeordnet. Die mindestens eine Führungseinrichtung kann dabei stromaufwärts oder stromabwärts zu der Qualitäts-Bestimmungs-Sensoranordnung angeordnet sein. Es ist von Vorteil, wenn die mindestens eine Führungseinrichtung oberhalb und/oder unterhalb der Wellpappe-Bahn angeordnet ist. Günstigerweise steht die mindestens eine Führungseinrichtung in direktem Kontakt mit der Wellpappe-Bahn.

Der veränderbare Führungsspalt erlaubt eine Anpassung an unterschiedliche Wellpappe-Bahnen, insbesondere mit verschiedenen Dicken.

Die mindestens eine Führungseinrichtung umfasst mindestens eine Führungswalze, bevorzugter mindestens eine Bügelwalze. Es ist von Vorteil, wenn genau eine Führungswalze vorgesehen ist. Alternativ sind beispielsweise mindestens zwei, insbesondere genau zwei, Führungswalzen vorgesehen. Anstelle der mindestens einen Führungswalze ist beispielsweise mindestens ein Andrückschuh vorgesehen.

Vorzugsweise schließt die mindestens eine Führungswalze mit der Wellpappe-Bahn in Bezug auf eine lotrechte Ausrichtung zu der Transportrichtung bzw. Längsrichtung der Wellpappe-Bahn einen Winkel ein, der zwischen 2° und 20°, bevorzugter zwischen 3° und 10°, liegt. Durch die Schrägstellung der mindestens einen Führungswalze sind Schwingungen der Wellpappe-Bahn besonders gut vermeidbar, die ansonsten das Messergebnis verfälschen würden. Die mindestens eine Führungswalze liegt vorzugsweise immer auf mindestens zwei Wellenspitzen der Wellpappe-Bahn auf und bleibt außer Eingriff mit Wellentälern der Wellpappe-Bahn.

Auch durch die Kalibrieranordnung ist die Qualität der Wellpappe-Bahn äußerst exakt bestimmbar. Es ist von Vorteil, wenn dabei eine Abweichung der Qualitäts-Bestimmungs-Sensoranordnung von einer Soll-Vorgabe erfassbar ist und diese Abweichung anschließend bei der Qualitäts-Bestimmung der Wellpappe-Bahn berücksichtigt wird. Es ist von Vorteil, wenn eine Kalibrierung bei einem Start der Anlage zur Herstellung einer zweiseitig kaschierten Wellpappe-Bahn und/oder bei jeder Unterbrechung der Wellpappe-Bahn erfolgt.

Das mindestens eine Kalibrierteil hat vorzugsweise eine ebene Kalibrierfläche, die der ersten Qualitäts-Bestimmungs-Sensoreinheit zugewandt ist. Das mindestens eine Kalibrierteil ist vorzugsweise als Platte, Leiste, Steg, Block oder dergleichen ausgebildet. Es ist von Vorteil, wenn sich das mindestens eine Kalibrierteil nur über einen Bruchteil der Breite der Wellpappe-Bahn erstreckt.

Das mindestens eine Kalibrierteil steht vorzugsweise mit der zweiten Qualitäts-Bestimmungs-Sensoreinheit in, vorzugsweise direkter oder indirekter, Verbindung. Es ist dann günstigerweise zusammen mit der zweiten Qualitäts-Bestimmungs-Sensoreinheit verfahrbar.

Alternativ ist das mindestens eine Kalibrierteil beispielsweise an einer Führung zum Führen der zweiten Qualitäts-Bestimmungs-Sensoreinheit verlagerbar gelagert. Es ist dann vorzugsweise zwischen einer Kalibierstellung und einer Nicht-Kalibrierstellung verlagerbar, insbesondere verschiebbar oder verschwenkbar.

Der Versatz der Qualitäts-Bestimmungs-Sensoreinheiten zueinander ist bei einem Messvorgang günstigerweise so klein wie möglich, um bei dem Messvorgang im Wesentlichen einander gegenüberliegende Bereiche der Wellpappe-Bahn zu messen. Der Versatz der Qualitäts-Bestimmungs-Sensoreinheiten in der Transportrichtung der Wellpappe-Bahn erlaubt eine besonders einfache bzw. genaue Kalibrierung der ersten und/oder zweiten Qualitäts-Bestimmungs-Sensoreinheit/en.

Erfindungsgemäß sind die erste und zweite Qualitäts-Bestimmungs-Sensoreinheiten dann quer zu der Transportrichtung der Wellpappe-Bahn bei einem Kalibriervorgang geringfügig bzw. so wenig wie möglich versetzt zueinander. Auch so ist eine besonders einfache bzw. genaue Kalibrierung möglich. Bei einem Messvorgang liegt zwischen diesen vorzugsweise im Wesentlichen kein Versatz vor.
Die Signalverbindung zwischen der Auswerteeinheit und der Qualitäts-Bestimmungs-Sensoranordnung ist vorzugsweise drahtgebunden oder drahtlos.
Es ist von Vorteil, wenn die erste und/oder zweite Qualitäts-Bestimmungs-Sensoreinheit mit Laserstrahlung arbeitet.
Günstigerweise sind die erste Qualitäts-Bestimmungs-Sensoreinheit und die zweite Qualitäts-Bestimmungs-Sensoreinheit im Wesentlichen einander gegenüberliegend angeordnet. Die Qualitäts-Bestimmungs-Sensoreinheiten sind vorzugsweise, insbesondere bei einem Kalibriervorgang, geringfügig, beispielsweise in der Transportrichtung der Wellpappe-Bahn, versetzt zueinander angeordnet. Die Wellpappe-Bahn verläuft so vorzugsweise zwischen der ersten Qualitäts-Bestimmungs-Sensoreinheit und der zweiten Qualitäts-Bestimmungs-Sensoreinheit. Die Qualitäts-Bestimmungs-Sensoreinheiten sind günstigerweise unabhängig voneinander verfahrbar.
Es ist von Vorteil, wenn die zu prüfende Wellpappe-Bahn zweilagig, dreilagig, fünflagig oder siebenlagig ist.
Die Auswerteeinheit ist vorzugsweise eine elektrische bzw. elektronische Auswerteeinheit.

Weitere vorteilhafte Ausgestaltungen der Erfindung sind in den Unteransprüchen angegeben.

Es ist von Vorteil, wenn die erste Qualitäts-Bestimmungs-Sensoreinheit und/oder die zweite Qualitäts-Bestimmungs-Sensoreinheit quer zu einer Transportrichtung der Wellpappe-Bahn verlagerbar ist/sind. So sind Wellpappe-Bahnen über ihre Breite messbar bzw. hinsichtlich ihrer Qualität prüfbar. Günstigerweise ist eine Verlagerungsgeschwindigkeit der Qualitäts-Bestimmungs-Sensoreinheiten bei einem Messvorgang und/oder Kalibriervorgang identisch.

Es ist von Vorteil, wenn bei einem Messvorgang, die Qualitäts-Bestimmungs-Sensoreinheiten einander gegenüberliegend angeordnet sind und/oder deren Messstrahlen im Wesentlichen miteinander fluchten. Diese Ausgestaltung ermöglicht eine besonders kostengünstige und vollständige Qualitäts-Bestimmung der Wellpappe-Bahn.

Es ist von Vorteil, wenn die erste Qualitäts-Bestimmungs-Sensoreinheit und/oder die zweite Qualitäts-Bestimmungs-Sensoreinheit derart in einer Querrichtung der Wellpappe-Bahn verlagerbar ist/sind, dass diese imstande ist/sind, die Qualität der Wellpappe-Bahn über deren gesamte Breite zu bestimmen. Es ist von Vorteil, wenn die erste Qualitäts-Bestimmungs-Sensoreinheit und die zweite Qualitäts-Bestimmungs-Sensoreinheit synchron verlagerbar sind.

Es ist zweckmäßig, wenn die erste Qualitäts-Bestimmungs-Sensoreinheit ein erstes Oberflächenprofil der Wellpappe-Bahn bei deren ersten Seite erfasst. Diese Ausgestaltung erlaubt eine besonders exakte Bestimmung der Qualität der Wellpappe-Bahn. Die erste Qualitäts-Bestimmungs-Sensoreinheit misst vorzugsweise das erste Oberflächenprofil. Sie ist beispielsweise als Oberflächenprofil-Scanner, bevorzugter als Laser-Oberflächenprofil-Scanner, ausgebildet.

Günstigerweise erfasst die zweite Qualitäts-Bestimmungs-Sensoreinheit ein zweites Oberflächenprofil der Wellpappe-Bahn bei deren zweiten Seite. Auch diese Ausgestaltung erlaubt eine besonders genaue Bestimmung der Qualität der Wellpappe-Bahn. Die zweite Qualitäts-Bestimmungs-Sensoreinheit misst vorzugsweise das zweite Oberflächenprofil. Sie ist beispielsweise als Oberflächenprofil-Scanner, bevorzugter als Laser-Oberflächenprofil-Scanner, ausgebildet.

Vorzugsweise ist die Auswerteeinheit imstande, zumindest bereichsweise ein Wellpappe-Bahn-Kaliber der Wellpappe-Bahn zur Bestimmung der Qualität der Wellpappe-Bahn zu bestimmen. Durch die Bestimmung des Wellpappe-Bahn-Kalibers der Wellpappe-Bahn sind beispielsweise Quetschungen und/oder Aufwölbungen der Wellpappe-Bahn bestimmbar. Aufwölbungen sind oftmals das Ergebnis einer ungenügenden Verleimung zwischen einer Deckbahn und einer Wellbahn der Wellpappe-Bahn.

Günstigerweise ist die Auswerteeinheit imstande, zumindest bereichsweise eine Eindrück-Tiefe einer Deckbahn-Rillung der mindestens einen Deckbahn zur Bestimmung der Qualität der Wellpappe-Bahn zu bestimmen. Durch Bestimmung der Eindrück-Tiefe ist feststellbar, ob die Deckbahn-Rillung zu tief oder zu niedrig ausgeführt ist.

Die Bestimmung der Ebenheit der Wellpappe-Bahn gemäß dem Unteranspruch 2 gibt Aufschluss, ob die Wellpappe-Bahn beispielsweise ordnungsgemäß bedruckbar ist. Auf einer welligen Wellpappe-Bahn ist im Allgemeinen kein ordnungsgemäßes Druckbild erzeugbar.

Es ist von Vorteil, wenn die Auswerteeinheit imstande ist, Fehlstellen der Wellpappe-Bahn zur Bestimmung der Qualität der Wellpappe-Bahn zu bestimmen. Die Fehlstellen sind beispielsweise fehlerhafte Splicestellen, fehlerhaft verklebte Einzelbahnen oder dergleichen.

Es ist von Vorteil, wenn die Auswerteeinheit imstande ist, eine Schnittkanten-Qualität von mindestens einer Schnittkante der Wellpappe-Bahn zur Bestimmung der Qualität der Wellpappe-Bahn zu bestimmen. Durch die Bestimmung der Schnittkanten-Qualität der Wellpappe-Bahn bzw. von mindestens einer Einzelbahn derselben ist vorzugsweise feststellbar, ob mindestens eine Schnittkante beispielsweise einen Grat oder eine Quetschung aufweist.

Die Ausgestaltung gemäß dem Unteranspruch 3 ermöglicht eine schnelle Korrektur in der Produktion der Wellpappe-Bahn. Alternativ und/oder zusätzlich sind fehlerhafte Stücke der Wellpappe-Bahn aus dieser entfernbar.

Es ist von Vorteil, wenn die mindestens eine Führungseinrichtung gemäß dem Unteranspruch 5 außerdem mindestens einen Führungstisch zum Tragen der Wellpappe-Bahn aufweist.

Die mindestens eine Führungswalze und der mindestens eine Führungstisch sind vorzugsweise gemäß dem Unteranspruch 6 benachbart zueinander angeordnet und begrenzen einen Führungsspalt, den die Wellpappe-Bahn durchtritt.

Die Führungswalze bzw. der Andrückschuh bildet ein Andrückelement, das vorzugsweise an einer dem Führungstisch abgewandten Seite der Wellpappe-Bahn an der Wellpappe-Bahn angreift.

Die Ausgestaltung gemäß dem Unteranspruch 9 ergibt eine äußerst hohe Messgenauigkeit.

Mittels mindestens einem Beginn-Referenzelement ist beispielsweise zum einen eine erste Transversierungsachse der ersten und/oder zweiten Qualitäts-Bestimmungs-Sensoreinheit auf 0/Null stellbar und synchronisierbar. Dafür hat das mindestens eine Beginn-Referenzelement vorzugsweise eine Beginn-Referenzkante. Günstigerweise ist ferner mindestens ein End-Referenzelement vorhanden, das beabstandet zu dem mindestens einen Beginn-Referenzelement angeordnet ist und vorzugsweise eine End-Referenzkante hat. Es erfolgt günstigerweise ein Abgleich eines gemessenen Abstands zwischen den Referenzelementen mit dem bekannten Abstand zwischen diesen. Das wird bei der Auswertung berücksichtigt.

Zum anderen ist an dem mindestens einen Beginn-Referenzelement vorzugsweise eine zweite Transversierungsachse auf 0/Null stellbar und synchronisierbar, die senkrecht zu der ersten Transversierungsachse verläuft und sich vorzugsweise vertikal erstreckt. Das mindestens eine Beginn-Referenzelement weist dafür günstigerweise eine bekannte Dicke aufweist. Es erfolgt günstigerweise ein Abgleich der durch die Qualitäts-Bestimmungs-Sensoreinheiten gemessenen Dicke mit der bekannten Dicke. Das wird bei der Auswertung berücksichtigt.

Nachfolgend werden unter Bezugnahme auf die beigefügte Zeichnung bevorzugte Ausführungsformen der Erfindung beispielhaft beschrieben. Dabei zeigen:

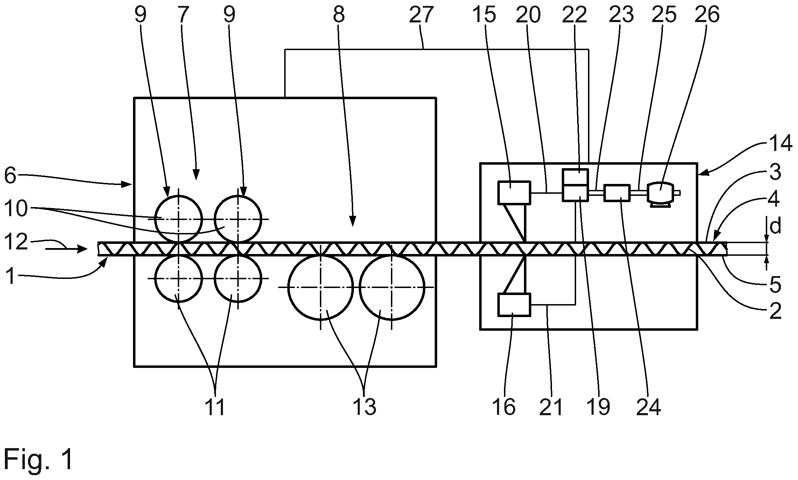

- Fig. 1: eine schematische Seitenansicht eines Teils einer erfindungsgemäßen Anlage zur Herstellung einer Wellpappe-Bahn,
- Fig. 2: eine Details zeigende Seitenansicht der in Fig. 1 dargestellten Vorrichtung zur Bestimmung der Qualität einer Wellpappe-Bahn,
- Fig. 3: eine der Figur 1 entsprechende Seitenansicht der Vorrichtung zur Bestimmung der Qualität einer Wellpappe-Bahn, wobei die Wellpappe-Bahn zur Erläuterung verschiedenste Fehler aufweist,
- Fig. 4: eine Seitenansicht entsprechend Figur 2, die im Vergleich zu Figur 2 weitere Details der Vorrichtung zur Bestimmung der Qualität einer Wellpappe-Bahn veranschaulicht,
- Fig. 5: eine Seitenansicht der in Figur gezeigten Vorrichtung zur Bestimmung der Qualität einer Wellpappe-Bahn, wobei sich dort im Gegensatz zu Figur 4 die Führungswalze in ihrer von der Wellpappe-Bahn abgehobenen Stellung befindet,
- Fig. 6: eine Seitenansicht einer Vorrichtung zur Bestimmung der Qualität einer Wellpappe-Bahn gemäß einer zweiten Ausführungsform, die anstelle einer Führungswalze einen Andrückschuh umfasst,
- Fig. 7: eine Seitenansicht einer Vorrichtung zur Bestimmung der Qualität einer Wellpappe-Bahn gemäß einer dritten Ausführungsform, die anstelle einer Führungswalze zwei Führungswalzen umfasst,
- Fig. 8: die Vorrichtung zur Bestimmung der Qualität einer WellpappeBahn gemäß Figur 7, wobei sich dort im Gegensatz zu Figur 7 die Führungswalzen in ihrer von der Wellpappe-Bahn abgehobenen Stellung befinden,
- Fig. 9: eine Seitenansicht einer erfindungsgemäßen Vorrichtung zur Bestimmung der Qualität einer Wellpappen-Bahn,

- Fig. 10: eine Seitenansicht einer Vorrichtung zur Bestimmung der Qualität einer Wellpappe-Bahn gemäß einer vierten Ausführungsform,
- Fig. 11: eine Seitenansicht der in Figur 10 dargestellten Vorrichtung zur Bestimmung der Qualität einer Wellpappe-Bahn, wobei sich hier im Gegensatz zu Figur 10 deren Kalibrierplatte in einer eingefahrenen Stellung befindet,
- Fig. 12: eine perspektivische Teilansicht einer nicht erfindungsgemäßen Vorrichtung zur Bestimmung der Qualität einer Wellpappe-Bahn,
- Fig. 13-17: Ansichten einer nicht erfindungsgemäßen Vorrichtung zur Bestimmung der Qualität einer Wellpappe-Bahn, um beispielhaft einzelne Verfahrensschritte zeigen,
- Fig. 18: eine vereinfachte perspektivische Ansicht, die eine bevorzugte Anordnung einer Führungswalze der Vorrichtung zur Bestimmung der Qualität einer Wellpappe-Bahn zeigt, und
- Fig. 19: eine Seitenansicht von Figur 18.
Eine Anlage zur Herstellung einer zweiseitig kaschierten Wellpappe-Bahn 1 umfasst eine Wellpappe-Produktions-Vorrichtung (nicht dargestellt) mit einer Riffel-Einrichtung und einer Leim-Auftrags-Einrichtung. Die Riffel-Einrichtung dient zur Erzeugung einer Wellbahn 2 aus einer endlosen Materialbahn. Sie weist dafür zwei drehantreibbare Riffel-Walzen auf, die zum Durchführen und Riffeln der endlosen Materialbahn einen Spalt ausbilden. Die Leim-Auftrags-Einrichtung hat eine Leim-Wanne und eine Leim-Auftrags-Walze sowie eine Leim-Dosier-Walze. In der Leim-Wanne befindet sich Leim. Die Leim-Dosier-Walze ist innerhalb der Leim-Wanne angeordnet. Sie liegt umfangsseitig an der Leim-Auftrags-Walze an und dient zum Ausbilden einer gleichmäßigen Leim-Schicht auf der Leim-Auftrags-Walze. Zum Beleimen der Wellbahn 2 bildet die Leim-Auftrags-Walze mit einer der Riffel-Walzen einen Spalt zum Durchführen der Wellbahn 2. Zum Anpressen der mit Leim aus der Leim-Wanne versehenen Wellbahn 2 gegen eine endlose, glatte, erste Materialbahn bzw. Deckbahn 3 weist die Wellpappe-Produktions-Vorrichtung eine Anpress-Einrichtung auf, die beispielsweise eine Anpress-Walze oder einen Anpress-Gurt umfasst.

Die in der Wellpappe-Produktions-Vorrichtung erzeugte, endlose, einseitig kaschierte Wellpappe-Bahn 4 wird durch eine Vorheiz-Einrichtung (nicht dargestellt) geführt, die zwei übereinander angeordnete, beheizbare Heiz-Walzen umfasst. Die einseitig kaschierte Wellpappe-Bahn 4 und eine endlose, glatte, zweite Materialbahn bzw. Deckbahn 5 laufen in der Vorheiz-Einrichtung übereinander und umschlingen teilweise die jeweilige HeizWalze.

Stromabwärts zu der Vorheiz-Einrichtung ist ein Leim-Werk (nicht dargestellt) angeordnet, das eine in ein Leim-Bad eingetauchte Beleimungs-Walze hat. Die Wellbahn 2 der einseitig kaschierten Wellpappe-Bahn 4 steht mit der Beleimungs-Walze in Kontakt, sodass diese mit Leim versehen wird.

Stromabwärts zu dem Leim-Werk ist eine Heiz-Andrück-Vorrichtung (nicht dargestellt) angeordnet, die einen Heiz-Tisch und oberhalb desselben eine Andrück-Einrichtung umfasst. Die einseitig kaschierte Wellpappe-Bahn 4 und die zweite Deckbahn 5 werden durch einen durch die Andrück-Einrichtung und den Heiz-Tisch begrenzten Spalt geführt, wo die einseitig kaschierte Wellpappe-Bahn 4 und die zweite Deckbahn 5 zusammen gedrückt und miteinander verleimt werden. In der Heiz-Andrück-Vorrichtung wird die zweiseitig kaschierte bzw. dreilagige Wellpappe-Bahn 1 gebildet.

Stromabwärts zu der Heiz-Andrück-Vorrichtung ist eine Längsschneide-Rill-Vorrichtung 6 angeordnet, die eine Rill-Einrichtung 7 und eine Längsschneide-Einrichtung 8 umfasst. Die Rill-Einrichtung 7 wiederum weist zwei hintereinander angeordnete Rill-Stationen 9 auf, die jeweils ein RillWerkzeug 10 und ein diesem zugeordnetes Gegen-Rillwerkzeug 11 umfassen. Die Rill-Werkzeuge 10 und die Gegen-Rillwerkzeuge 11 sind drehantreibbar. Wenn sich die Rill-Werkzeuge 10 und die Gegen-Rillwerkzeuge 11 in ihrer Eingriffs- bzw. Rill-Position befinden, ist mittels jeden Paares von Rill-Werkzeugen 10 bzw. Gegen-Rillwerkzeugen 11 in der in einer Transportrichtung 12 transportierten Wellpappe-Bahn 1 eine Längs-Rillung bzw. Längs-Rillen erzeugbar. Die Längsschneide-Einrichtung 8 weist zwei hintereinander angeordnete Längsschneide-Stationen 13 auf. Jede Längsschneide-Station 13 hat ein drehantreibbares Messer, das mit der Wellpappe-Bahn 1 zur Längsdurchtrennung derselben unter Bildung einzelner Teilbahnen in Eingriff bringbar ist.

Stromabwärts zu der Längsschneide-Rill-Vorrichtung 6 ist eine Qualitäts-Bestimmungs-Vorrichtung 14 angeordnet, die imstande ist, die Qualität der Wellpappe-Bahn 1 zu bestimmen. Die in Teilbahnen geteilte, gerillte Wellpappe-Bahn 1 durchläuft die Qualitäts-Bestimmungs-Vorrichtung 14. Die Qualitäts-Bestimmungs-Vorrichtung 14 steht über einer Signalleitung 27 mit der Längsschneide-Rill-Vorrichtung 6 in Signalverbindung. Alternativ liegt eine drahtlose Verbindung vor.

Die Qualitäts-Bestimmungs-Vorrichtung 14 weist eine erste Laser-Sensoreinheit 15 und eine zweite Laser-Sensoreinheit 16 auf. Die erste Laser-Sensoreinheit 15 ist oberhalb der Wellpappe-Bahn 1 angeordnet, während die zweite Laser-Sensoreinheit 16 unterhalb der Wellpappe-Bahn 1 angeordnet ist. Die Wellpappe-Bahn 1 läuft so zwischen den beiden Laser-Sensoreinheiten 15, 16. Eine umgekehrte Anordnung der Laser-Sensoreinheiten 15, 16 ist alternativ möglich.

Die Laser-Sensoreinheiten 15, 16 sind in der Transportrichtung 12 der Wellpappe-Bahn 1 geringfügig versetzt zueinander angeordnet. Vorzugsweise ist die erste Laser-Sensoreinheit 15 stromaufwärts zu der zweiten Laser-Sensoreinheit 16 angeordnet. Die Laser-Sensoreinheiten 15, 16 bilden zusammen eine Laser-Sensoranordnung.

Die Laser-Sensoreinheiten 15, 16 sind quer zu der Transportrichtung 12 der Wellpappe-Bahn 1 und quer zu der Wellpappe-Bahn 1 entlang von Führungen 17 bzw. 18 mittels nicht dargestellter Antriebe synchron verschiebbar.

Die erste Laser-Sensoreinheit 15 ist bei Verlagerung entlang der Führung 17 imstande, ein erstes Oberflächenprofil der Wellpappe-Bahn 1 bzw. der ersten Deckbahn 3 zu messen, während die zweite Laser-Sensoreinheit 16 bei Verlagerung entlang der Führung 18 imstande ist, ein zweites Oberflächenprofil der Wellpappe-Bahn 1 bzw. der zweiten Deckbahn 5 zu messen. Insbesondere sind die Laser-Sensoreinheiten 15, 16 imstande, Vertiefungen in der Wellpappe-Bahn 1 und/oder von der eigentlichen Wellpappe-Bahn 1 vorspringende Erhöhungen zu messen.

Die Qualitäts-Bestimmungs-Vorrichtung 14 umfasst eine Bügelwalze 28, die stromaufwärts zu den Laser-Sensoreinheiten 15, 16 angeordnet ist. Die Bügelwalze 28 ist oberhalb der Wellpappe-Bahn 1 angeordnet und steht mit dieser in direktem Kontakt. Unterhalb der Bügelwalze 28 befindet sich ein Tragkörper 29, der die Wellpappe-Bahn 1 dort trägt bzw. unterstützt. Durch die Bügelwalze 28 und den tischartigen Tragkörper 29 ist die Wellpappe-Bahn 1 exakt geführt, was die Genauigkeit der Laser-Sensoranordnung erhöht.

An der zweiten Laser-Sensoreinheit 16 bzw. an dessen Schlitten ist ein Kalibrierteil 30 angeordnet, das gegenüber der zweiten Laser-Sensoreinheit 16 in Richtung auf die Wellpappe-Bahn 1 bzw. die erste Laser-Sensoreinheit 15 vorspringt. Das Kalibrierteil 30 hat einen Kalibriersteg 31 mit einer der ersten Laser-Sensoreinheit 15 zugewandten Kalibrierfläche 32, die beabstandet unterhalb der Wellpappe-Bahn 1 verläuft. Die Kalibrierfläche 32 erstreckt sich horizontal bzw. parallel zu der Wellpappe-Bahn 1.

Wenn sich keine Wellpappe-Bahn 1 bei der Laser-Sensoranordnung befindet, trifft zur Kalibrierung ein Laserstrahl 33 der ersten Laser-Sensoreinheit 15 von oben auf die Kalibrierfläche 32, was eine Kalibrierung der ersten Laser-Sensoreinheit 15 bzw. der Laser-Sensoranordnung erlaubt. Bei der Kalibrierung werden die beiden Laser-Sensoreinheiten 15, 16 beide parallel synchron über die gesamte Arbeitsbreite verfahren.

Die von den Laser-Sensoreinheiten 15, 16 ermittelten Messwerte werden einer Auswerteeinheit 19 über Signalleitungen 20 bzw. 21 zugeführt. Alternativ liegt eine drahtlose Verbindung vor.

In der Auswerteeinheit 19 ist beispielsweise die Lage der Längs-Rillung/en in der ersten und/oder zweiten Deckbahn 3 bzw. 5 quer zu der Transportrichtung 12 bestimmbar und bewertbar. Ferner ist die jeweilige Lage eines Außenrands einer Teilbahn zu mindestens einem Längsschnitt, also die Breite der jeweiligen Teilbahn, bestimmbar und bewertbar. Es ist durch Auswertung der Lage der Längs-Rillungen in der ersten und zweiten Deckbahn 3 bzw. 5 und des mindestens einen Längsschnitts und der Außenränder feststellbar, ob die Lagen der Wellpappe-Bahn 1 zueinander richtig ist. Es ist beispielsweise ferner der Abstand der Längs-Rillung/en von dem jeweiligen Außenrand und/oder der Abstand der Längs-Rillung/en der Teilbahn/en von dem mindestens einen Längsschnitt bestimmbar und bewertbar. Durch den von der ersten Laser-Sensoreinheiten 15 bestimmten Abstand zu der ersten Deckbahn 3 und den von der zweiten Laser-Sensoreinheiten 16 bestimmten Abstand zu der zweiten Deckbahn 5 ist in der Auswerteeinheit die Dicke d der Wellpappe-Bahn 1 bestimmbar und bewertbar.

Der Auswerteeinheit 19 ist vorzugsweise ein Anzeigegerät 22 zugeordnet.

Mit der Auswerteeinheit 19 steht über eine Signalleitung 23 ein Steuergerät 24 in Signalverbindung. Alternativ liegt eine drahtlose Verbindung vor. Mit dem Steuergerät 24 steht über eine Signalleitung 25 ein Antriebsmotor 26 in Signalverbindung. Alternativ ist eine drahtlose Verbindung vorgesehen. Der Antriebsmotor 26 ist vorzugsweise Bestandteil eines der Qualitäts-Bestimmungs-Vorrichtung 14 nachgeordneten Quer-Schneiders (nicht dargestellt). Mittels des Quer-Schneiders ist ein Bahn-Abschnitt aus der Wellpappe-Bahn 1 herausschneidbar, der als nicht ordnungsgemäß klassifiziert ist. Ein solcher fehlerhafter Bahn-Abschnitt ist vorzugsweise mittels einer den Quer-Schneider nachgeordneten Weiche ausscheidbar. Die Längsschneide-Rill-Vorrichtung 6 ist außerdem durch das Steuergerät 24 ansteuerbar.

Alternativ ist der Antriebsmotor 26 günstigerweise Bestandteil der Längsschneide-Rill-Vorrichtung 6. Die Rill-Einrichtung 7 und/oder Längsschneide-Einrichtung 8 ist so bevorzugt ansteuerbar, um beispielsweise entsprechende erfasste Abweichungen der Wellpappe-Bahn 1 gleich zu beheben.

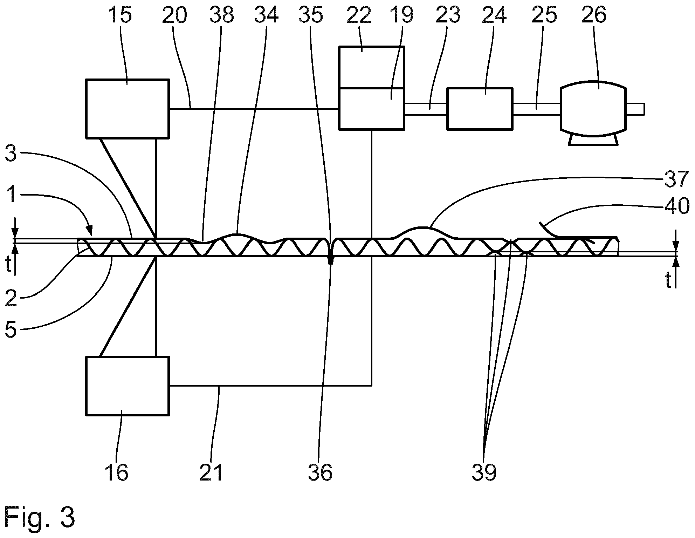

In Fig. 3 sind verschiedene Mängel einer Wellpappe-Bahn 1 gezeigt, die mit der Qualitäts-Bestimmungs-Vorrichtung 14 feststellbar sind.

Beispielsweise sind Erhöhungen 34 der ersten und/oder zweiten Deckbahn 3 bzw. 5 feststellbar und deren Höhe bestimmbar. Beispielsweise sind Einschnitte 35 bzw. eine Gratbildung 36 an der ersten und/oder zweiten Deckbahn 3 bzw. 5 feststellbar. Insbesondere ist auch die Tiefe t der Einschnitte 35 bestimmbar. Beispielsweise ist eine ungenügende Verleimung 37 der ersten und/oder zweiten Deckbahn 3 bzw. 5 mit der Wellbahn 2 feststellbar. Beispielsweise ist eine Vertiefung 38 in der ersten und/oder zweiten Deckbahn 3 bzw. 5 feststellbar. Insbesondere ist auch deren Tiefe t bestimmbar. Beispielsweise sind Längs-Rillen 39 in der ersten und/oder zweiten Deckbahn 3 bzw. 5 feststellbar. Insbesondere ist deren Lage und Tiefe t bestimmbar. Beispielsweise sind überschüssige Lagen bzw. Material-Stücke 40 feststellbar.

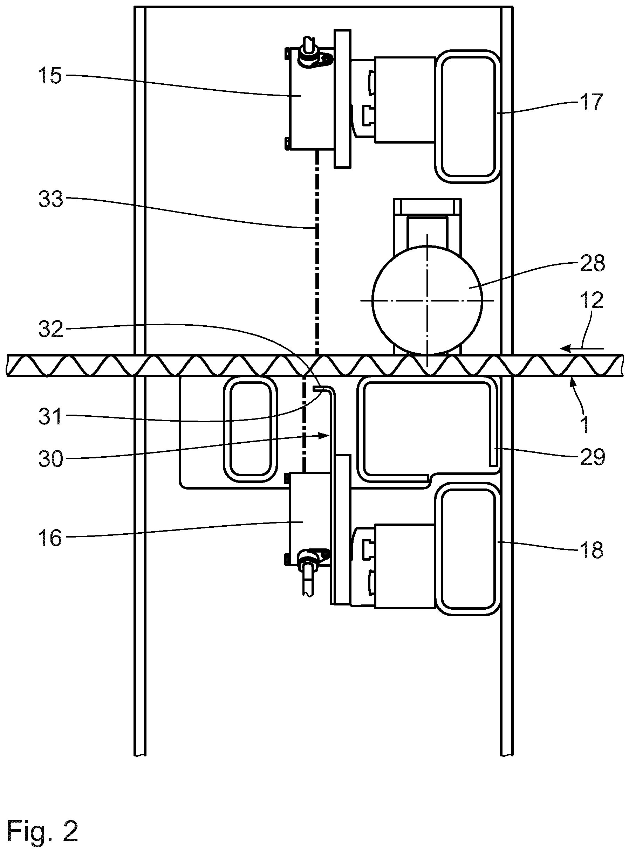

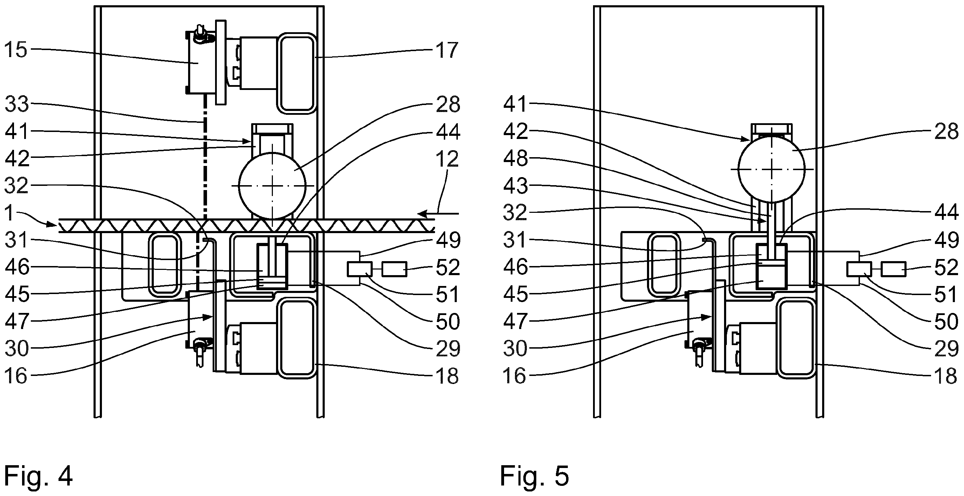

In den Figuren 4 und 5, auf die nachfolgend Bezug genommen wird, ist die in Figur 2 dargestellte Qualitäts-Bestimmungs-Vorrichtung 14 detaillierter gezeigt. Auf die zugehörige vorherige Beschreibung wird verwiesen. Die Bügelwalze 28 ist mittels einer Bügelwalzen-Verstelleinrichtung 41 senkrecht zu der Transportrichtung 12 und zu einer Querrichtung der Wellpappe-Bahn 1, also hier in der Höhe, verlagerbar. Durch die Bügelwalzen-Verstelleinrichtung 41 ist so der Abstand der Bügelwalze 28 zu dem Tragkörper 29 veränderbar, also vergrößerbar oder reduzierbar, was zu einer entsprechenden Veränderung des Führungsspalts führt. Die Qualitäts-Bestimmungs-Vorrichtung 14 ist so an unterschiedliche Wellpappe-Bahnen 1, insbesondere mit unterschiedlichen Dicken, Fluten oder dergleichen, und/oder an verschiedene Transportgeschwindigkeiten 12 der Wellpappe-Bahn 1 anpassbar. Beispielsweise ist so auch ein Anpressdruck der Bügelwalze 28 gegen die Wellpappe-Bahn 1 veränderbar.

Die Bügelwalzen-Verstelleinrichtung 41 hat mindestens eine Führungsstange 42, die sich günstigerweise vertikal erstreckt und die Bügelwalze 28 bei ihrer Verstellung führt.

Außerdem hat die Bügelwalzen-Verstelleinrichtung 41 eine Verlagerungseinrichtung 43, die direkt oder indirekt, an die Bügelwalze 28 angreift. Die Verlagerungseinrichtung 43 arbeitet vorzugsweise pneumatisch.

Die Verlagerungseinrichtung 43 hat hier ein, vorzugsweise an dem Tragkörper 29 befestigtes, Zylindergehäuse 44 und einen in dem Zylindergehäuse 44 axial verschiebbar geführten Kolben 45, der das Zylindergehäuse 44 in einen ersten Arbeitsraum 46 und einen zweiten Arbeitsraum 47 unterteilt. Mit dem Kolben 45 steht eine Kolbenstange 48 in Verbindung, die aus dem Zylindergehäuse 44 herausgeführt ist und an der Bügelwalze 28, direkt oder indirekt, angreift.

In den ersten Arbeitsraum 46 mündet eine erste Fluidleitung 49, während in den zweiten Arbeitsraum 47 eine zweite Fluidleitung 50 mündet. Jede Fluidleitung 49, 50 ist an eine Druckerzeugungseinheit 51 angeschlossen, die vorzugsweise als Verdichter bzw. Kompressor ausgeführt ist.

Mit der Druckerzeugungseinheit 51 ist eine Steuereinheit 52 zur Ansteuerung der Druckerzeugungseinheit 51 verbunden. In Abhängigkeit der Ansteuerung der Druckerzeugungseinheit 51 durch die Steuereinheit 52 wird über die erste Fluidleitung 49 der erste Arbeitsraum 46 mit Druckluft oder über die zweite Fluidleitung 50 der zweite Arbeitsraum 47 mit Druckluft beaufschlagt.

In Abhängigkeit der Beaufschlagung des ersten Arbeitsraums 46 bzw. des zweiten Arbeitsraums 47 mit Druckluft wird der Kolben 45 und damit auch die mit diesem in Verbindung stehende Kolbenstange 48 axial verlagert, was wiederum zu einer entsprechenden Verlagerung bzw. Verstellung der Bügelwalze 28 führt.

Die Bügelwalzen-Verstellvorrichtung 41 arbeitet alternativ zum Beispiel hydraulisch. Alternativ hat diese beispielsweise einen Spindelantrieb zum Verlagern der Bügelwalze 28. Alternativ erfolgt beispielsweise eine Beaufschlagung der Wellpappe-Bahn 1 nur mit einem Eigengewicht der Bügelwalze 28.

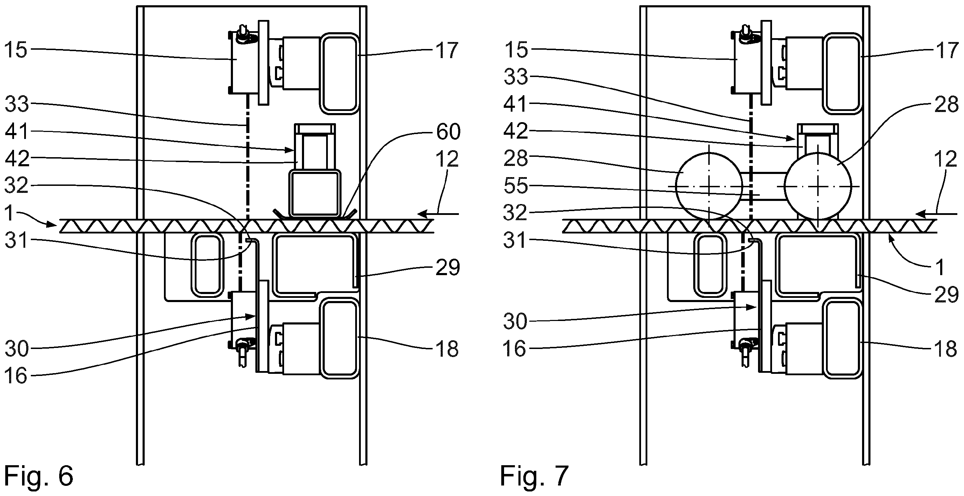

Nachfolgend wird unter Bezugnahme auf Fig. 6 eine weitere Ausführungsform der Qualitäts-Bestimmungs-Vorrichtung 14 beschrieben. Im Gegensatz zu der vorherigen Ausführungsform, auf die verwiesen wird, ist anstelle der Bügelwalze 28 ein Andrückschuh 60 vorhanden, der oberhalb der Wellpappe-Bahn 1 angeordnet ist und mit dieser in direktem Kontakt steht. Der Andrückschuh 60 ist in seiner Höhe verstellbar. Dafür ist die Verstelleinrichtung 41 einsetzbar.

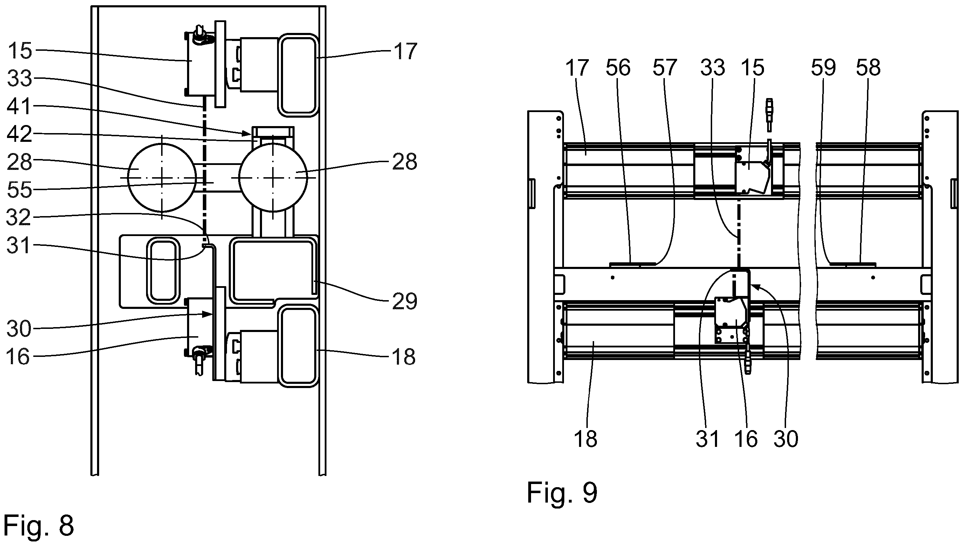

Nachfolgend wird unter Bezugnahme auf Figuren 7, 8 eine weitere Qualitäts-Bestimmungs-Vorrichtung 14 beschrieben. Diese hat im Gegensatz zu der Qualitäts-Bestimmungs-Vorrichtung 14 gemäß Figur 2 zwei Bügelwalzen 28, die in Transportrichtung 12 der Wellpappe-Bahn 1 hintereinander angeordnet sind.

Die Bügelwalzen 28 sind dabei paarweise angeordnet und erstrecken sich parallel zueinander. Sie sind über eine starre Kopplungseinrichtung 55 miteinander gekoppelt, sodass beide Bügelwalzen 28 gemeinsam in der Höhe verlagerbar bzw. verstellbar sind. Für die Verstellung ist die Verstelleinrichtung 41 einsetzbar.

Die Bügelwalzen 28 sind derart angeordnet, dass der Laserstrahl 33 der ersten Laser-Sensoreinheit 15 zwischen diesen von oben auf die Wellpappe-Bahn 1 trifft. Die Bügelwalzen 28 sind günstigerweise identisch ausgeführt. Alternativ sind diese unterschiedlich.

In Figur 7 befinden sich die Bügelwalzen 28 in direktem Kontakt mit der Wellpappe-Bahn 1, wodurch diese geführt wird. Sie liegen oben auf der Wellpappe-Bahn 1 auf. In Figur 8 befinden sich diese in ihrer oberen Stellung. Sie sind von der Wellpappe-Bahn 1 (nicht dargestellt) abgehoben.

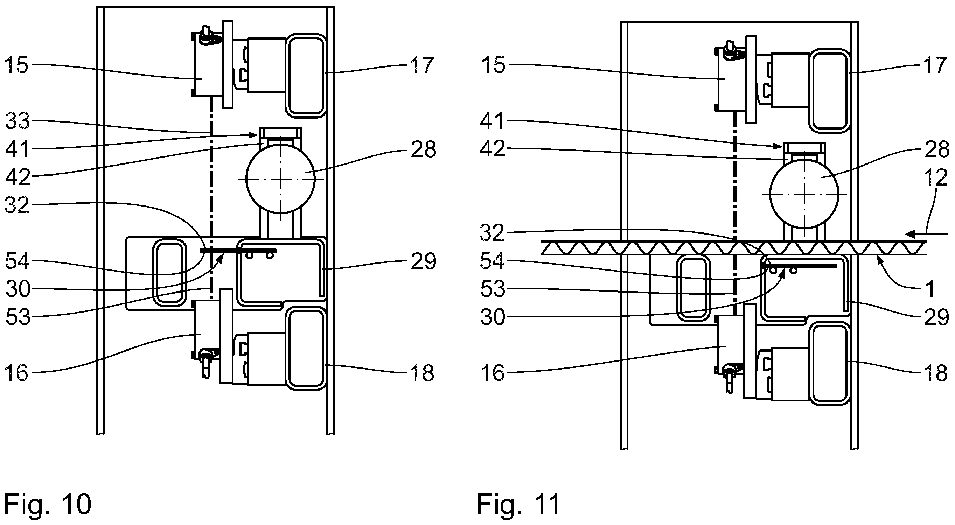

Erfindungsgemäß wie aus Figur 9 hervorgeht, sind die Laser-Sensoreinheiten 15, 16 bei einem Kalibriervorgang quer zu der Transportrichtung 12 der Wellpappen-Bahn 1 versetzt zueinander, so dass auch deren Laserstrahlen entsprechend quer zu der Transportrichtung 12 der Wellpappen-Bahn 1 versetzt zueinander sind. Dafür fahren die Laser-Sensoreinheiten 15, 16 bei dem Kalibriervorgang mit gleicher Geschwindigkeit, aber entsprechend versetzt zueinander, über die Arbeitsbreite. Bei dem eigentlichen Messvorgang sind die Laser-Sensoreinheiten 15, 16 einander gegenüberliegend angeordnet und fahren mit identischer Geschwindigkeit, wobei deren Laserstrahlen im Wesentlichen miteinander fluchten.
Wie aus Figur 9 hervorgeht, hat der Kalibriersteg 31 eine Breite, die nur einen Bruchteil der Breite der Wellpappe-Bahn 1 bzw. der Arbeitsbreite beträgt. Das Kalibrierteil 30 ist über die gesamte Breite der Wellpappe-Bahn 1 bzw. Arbeitsbreite verfahrbar. Es ist dazu an der zweiten Laser-Sensoreinheit 16 bzw. an dessen Schlitten befestigt.
Aufgrund des Verfahrens des ersten Kalibrierteils 30 mit der zweiten Laser-Sensoreinheit 16 ist die Durchbiegung der Führungen 17, 18 erfassbar, die die Laser-Sensoreinheiten 15, 16 tragen bzw. führen. Die Führungen 17, 18 können sich im Betrieb aufgrund thermischer Einflüsse verändern, insbesondere durchbiegen.
Bei einer alternativen Ausführungsform der Qualitäts-Bestimmungs-Vorrichtung 14 gemäß Figuren 10, 11 ist das Kalibrierteil 30 als Kalibrierplatte ausgebildet, die zwischen einer Kalibierstellung (Figur 10) und einer Nicht-Kalibrierstellung (Figur 11) verlagerbar, insbesondere verfahrbar, ist. Das Kalibrierteil 30 erstreckt sich horizontal bzw. parallel zu einem benachbarten Abschnitt der Wellpappe-Bahn 1.

In der Kalibrierstellung trifft zur Kalibrierung der Laserstrahl 33 von oben auf die Kalibrierfläche 32, was eine Kalibrierung der ersten Laser-Sensoreinheit 15 bzw. der Laser-Sensoranordnung erlaubt. Dabei befindet sich keine Wellpappe-Bahn 1 in der Qualitäts-Bestimmungs-Vorrichtung 14. Ein Laserstrahl 53 der zweiten Laser-Sensoreinheit 16 trifft von unten auf eine zweite Kalibrierfläche 54 des Kalibrierteils 30, was eine Kalibrierung der zweiten Laser-Sensoreinheit 16 bzw. der Laser-Sensoranordnung erlaubt. Die zweite Kalibrierfläche 54 ist gegenüberliegend zu der Kalibrierfläche 32 angeordnet, die eine erste Kalibrierfläche 32 bildet. Das Kalibrierteil 30 ist im Wesentlichen parallel zu einem benachbarten Abschnitt der Wellpappe-Bahn 1 verlagerbar. Es ist dafür entsprechend geführt.

Das Kalibrierteil 30 befindet sich vorzugsweise in seiner Nicht-Kalibrierstellung, wenn die Wellpappe-Bahn 1 die Qualitäts-Bestimmungs-Vorrichtung 14 durchläuft und hinsichtlich Qualität geprüft wird.

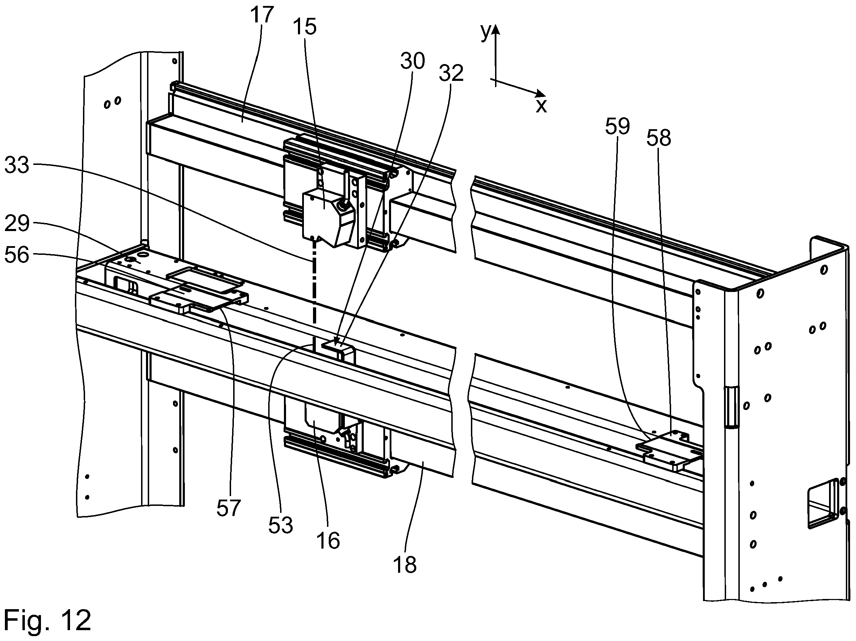

In Figur 12 ist ein Teil einer nicht erfindungsgemäßen Qualitäts-Bestimmungs-Vorrichtung 14 perspektivisch dargestellt. Diese umfasst ein Beginn-Referenzelement 56 mit einer inneren Beginn-Referenzkante 57 und ein End-Referenzelement 58 mit einer inneren End-Referenzkante 59. Die Referenzelemente 56, 58 sind beabstandet zueinander angeordnet. Sie sind längs der Querrichtung der Wellpappe-Bahn 1 beabstandet zueinander angeordnet. Die Referenzelemente 56, 58 sind in einander gegenüberliegenden Endbereichen der Arbeitsbreite bzw. benachbart zu Längsrändern der Wellpappe-Bahn 1 angeordnet.

Günstigerweise sind die Referenzelemente 56, 58 plattenförmig. Sie liegen vorzugsweise in einer gemeinsamen Ebene und erstrecken sich bevorzugt horizontal. Die Referenzkanten 57, 59 sind einander zugewandt und verlaufen parallel zueinander. Sie erstrecken sich parallel zu den Längsrändern der Wellpappe-Bahn 1. Der Abstand der Referenzkanten 57, 59 zueinander ist bekannt.

Es ist eine Änderung bzw. Abweichung der Abstände zwischen den Referenzkanten 57, 59 erfassbar, die vor allem auf thermische Einflüsse zurückzuführen ist. Diese erfasste Änderung wird später bei der Bestimmung der Qualität der Wellpappe-Bahn 1 bzw. bei der Auswertung entsprechender Signale berücksichtigt.

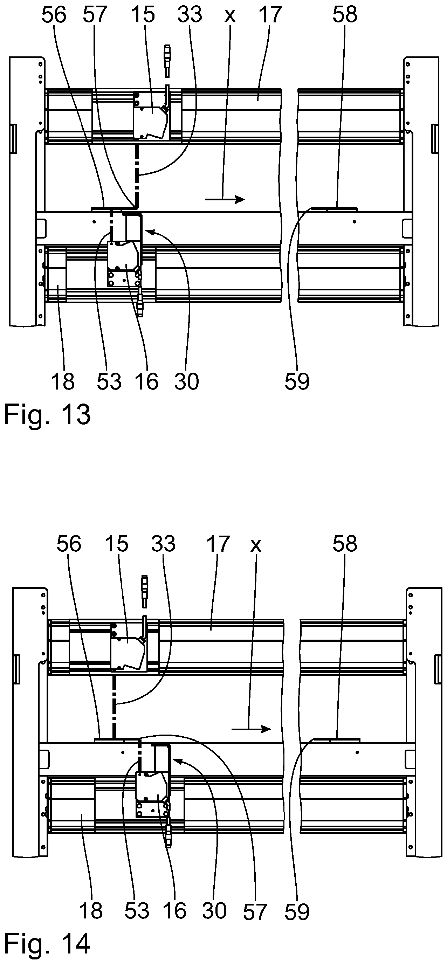

Figuren 13 bis 17 zeigen nicht erfindungsgemäßen Laser-Sensoreinheiten 15, 16 im Einsatz.
Figur 13 zeigt, wie die erste Laser-Sensoreinheit 15 auf 0/Null gestellt wird. Die erste Laser-Sensoreinheit 15 und vorzugsweise auch die zweite Laser-Sensoreinheit 16 werden vor dem Kalibriervorgang zu dem Beginn-Referenzelement 56 verfahren. Der Laserstrahl 33 der ersten Laser-Sensoreinheit 15 befindet sich bei der Beginn-Referenzkante 57. Der Laserstrahl 53 der zweiten Laser-Sensoreinheit 16 trifft dabei vorzugsweise von unten auf das Beginn-Referenzelement 56.
An dem Beginn-Referenzelement 56 wird eine zwischen den Referenzelementen 56, 58 verlaufende Horizontal-Transversierungsachse x der ersten Laser-Sensoreinheit 15 auf 0/Null gestellt und synchronisiert.

Figur 14 zeigt, wie die zweite Laser-Sensoreinheit 16 auf 0/Null gestellt wird. Der Laserstrahl 53 der zweiten Laser-Sensoreinheit 16 befindet sich dabei an der Beginn-Referenzkante 57. Der Laserstrahl 33 der ersten Laser-Sensoreinheit 15 trifft dabei günstigerweise von oben auf das Beginn-Referenzelement 56.

An dem Beginn-Referenzelement 56 wird eine zwischen den Referenzelementen 56, 58 verlaufende Horizontal-Transversierungsachse x der zweiten Laser-Sensoreinheit 16 auf 0/Null gestellt und synchronisiert.

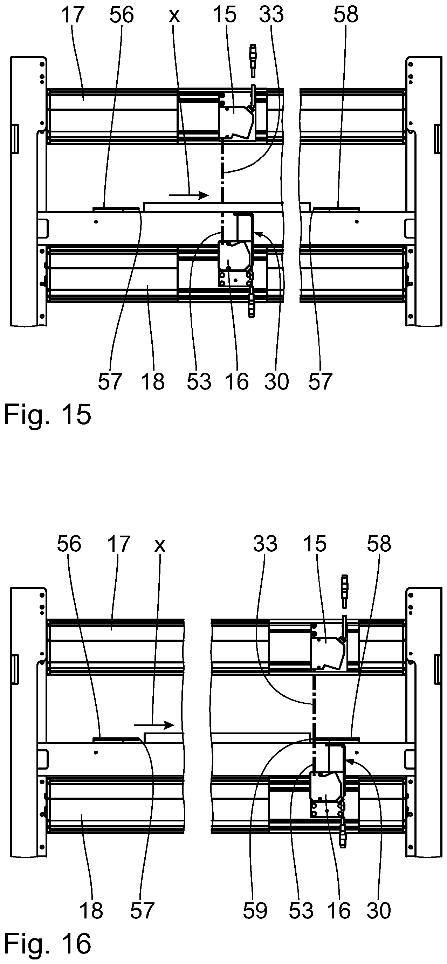

Figur 15 zeigt die eigentliche Messung zur Bestimmung der Qualität der Wellpappe-Bahn 1. Die Laser-Sensoreinheiten 15, 16 sind von dem Beginn-Referenzelement 56 weg verfahren und ihre Laserstrahlen 33, 53 treffen in einander gegenüberliegenden Bereichen auf die Wellpappe-Bahn 1, wodurch diese prüfend abgetastet wird. Die Laserstrahlen 33, 53 befinden sich zwischen den Referenzelementen 56, 58 und fluchten im Wesentlichen miteinander. Die Laser-Sensoreinheiten 15, 16 sind dabei im Wesentlichen nicht versetzt zueinander.

Die Laser-Sensoreinheiten 15, 16 fahren zu dem End-Referenzelement 58, wobei dort die Laserstrahlen 33, 53 gemeinsam auf die End-Referenzkante 59 treffen, wie Figur 16 zeigt. Es erfolgt dann ein Abgleich der Messung mittels der End-Referenzkante 59 am Ende der Messstrecke der Laser-Sensoreinheiten 15, 16. Der Abstand der Referenzkanten 57, 59 wird gemessen bzw. berechnet. Er wird bei der Auswertung der Messwerte berücksichtigt.

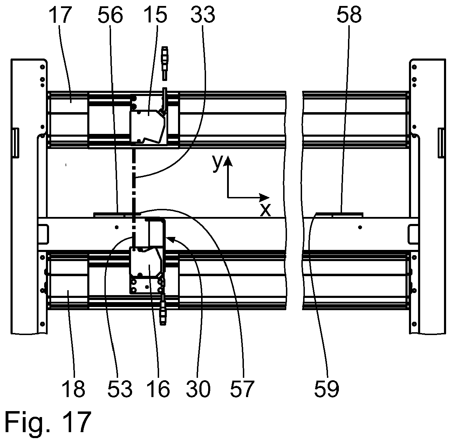

Figur 17 zeigt ein Nullstellen der Laser-Sensoreinheiten 15, 16 entlang der Transversierungsachse y. Dies erfolgt wieder vor Beginn der eigentlichen Messung und ist insbesondere wichtig für eine exakte Messung der Dicke der Wellpappe-Bahn 1 und deren Rillentiefe. Die Laserstrahlen 33, 53 treffen dazu gemeinsam auf das Beginn-Referenzelement 56, das eine definierte bzw. bekannte Dicke aufweist. Sie fluchten im Wesentlichen miteinander. Es erfolgt gegebenenfalls ein Abgleich.
Die Ausführungen zu den Figuren 13 bis 17 gelten im Wesentlichen analog zu dem Versatz in der Transportrichtung 12.

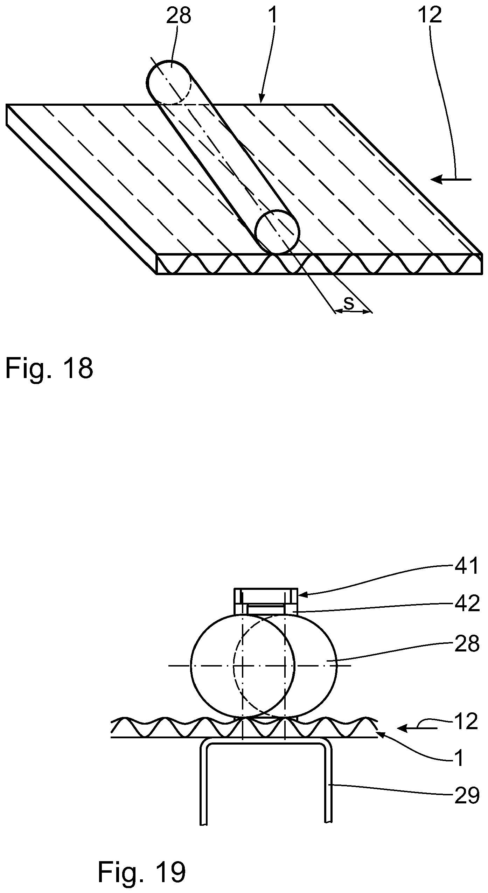

Gemäß Figuren 18, 19 ist die Bügelwalze 28 der erfindungsgemäßen Qualitäts-Bestimmungs-Vorrichtung 14 gegenüber der Wellpappe-Bahn 1 schräg gestellt. Sie verläuft somit schräg zu der Transportrichtung 12 der Wellpappe-Bahn 1 bzw. schräg zu deren Längsrändern. Sie ist gegenüber einer lotrechten Ausrichtung der Bügelwalze 28 zu der Wellpappe-Bahn 1 schräg gestellt. Alternativ aber nicht erfindungsgemäß ist die Bügelwalze 28 beispielsweise senkrecht zu der Transportrichtung 12 der Wellpappe-Bahn 1 bzw. senkrecht zu deren Längsrändern angeordnet.

Kombinationen der Ausführungsformen sind möglich.

## Patentansprüche

1. Vorrichtung zur Bestimmung der Qualität einer mindestens eine Deckbahn (3, 5) und mindestens eine Wellbahn (2) aufweisenden, bewegten Wellpappe-Bahn (1, 4), umfassend
a) eine Qualitäts-Bestimmungs-Sensoranordnung, die
i) eine einer ersten Seite der Wellpappe-Bahn (1, 4) zugewandte, erste Qualitäts-Bestimmungs-Sensoreinheit (15) zur Bestimmung der Qualität der Wellpappe-Bahn (1, 4) an deren ersten Seite aufweist, und
ii) eine einer der ersten Seite der Wellpappe-Bahn (1, 4) gegenüberliegenden zweiten Seite der Wellpappe-Bahn (1, 4) zugewandte, zweite Qualitäts-Bestimmungs-Sensoreinheit (16) zur Bestimmung der Qualität der Wellpappe-Bahn (1, 4) an deren zweiten Seite aufweist,
b) eine Auswerteeinheit (19), die
i) mit der Qualitäts-Bestimmungs-Sensoranordnung in Signalverbindung steht, und
ii) Signale der Qualitäts-Bestimmungs-Sensoranordnung in Bezug auf die Qualität der Wellpappe-Bahn (1, 4) auswertet, und
c) mindestens eine benachbart zu der Qualitäts-Bestimmungs-Sensoranordnung angeordnete, der Wellpappe-Bahn (1, 4) zugeordnete Führungseinrichtung (28) zum Führen der Wellpappe-Bahn (1, 4),
i) wobei die mindestens eine Führungseinrichtung (28) mindestens eine mit der Wellpappe-Bahn (1, 4) in Kontakt stehende Führungswalze zum Führen derselben umfasst,
**dadurch gekennzeichnet, dass**
d) ein Führungsspalt der mindestens einen Führungseinrichtung (28) veränderbar ist,
e) die mindestens eine Führungswalze (28) gegenüber der Wellpappe-Bahn (1, 4) schräg gestellt ist,
f) die Vorrichtung eine Kalibrieranordnung zum Kalibrieren der Qualitäts-Bestimmungs-Sensoranordnung umfasst,
g) mindestens ein Kalibrierteil (30) der Kalibrieranordnung zum Reflektieren eines ersten Messstrahls (33) der ersten Qualitäts-Bestimmungs-Sensoreinheit (15) zurück zu der ersten Qualitäts-Bestimmungs-Sensoreinheit (15) bei fehlender Wellpappe-Bahn (1, 4) an der zweiten Qualitäts-Bestimmungs-Sensoreinheit (16) angeordnet ist,
h) die erste Qualitäts-Bestimmungs-Sensoreinheit (15) und die zweite Qualitäts-Bestimmungs-Sensoreinheit (16) bei einer Kalibrierung aktiv sind, wobei der erste Messstrahl (33) auf das mindestens eine Kalibrierteil (30) trifft und die Auswerteeinheit (19) eine Kalibrierkurve mittels der ersten und/oder zweiten Qualitäts-Bestimmungs-Sensoreinheit (15 bzw. 16) erzeugt,
i) die erste Qualitäts-Bestimmungs-Sensoreinheit (15) und die zweite Qualitäts-Bestimmungs-Sensoreinheit (16) geringfügig in einer Transportrichtung (12) der Wellpappe-Bahn (1, 4) versetzt zueinander angeordnet sind, und
j) die erste Qualitäts-Bestimmungs-Sensoreinheit (15) und die zweite Qualitäts-Bestimmungs-Sensoreinheit (16) bei einem Kalibriervorgang geringfügig quer zu einer Transportvorrichtung (12) der Wellpappen-Bahn (1, 4) versetzt zueinander angeordnet sind.

2. Vorrichtung nach Anspruch 1, **dadurch gekennzeichnet, dass** die Auswerteeinheit (19) imstande ist, zumindest bereichsweise eine Ebenheit der Wellpappe-Bahn (1, 4) bei deren ersten und/oder zweiten Seite zur Bestimmung der Qualität der Wellpappe-Bahn (1, 4) zu bestimmen.

3. Vorrichtung nach Anspruch 1 oder 2, **dadurch gekennzeichnet, dass** die Auswerteeinheit (19) in Abhängigkeit einer erfassten Abweichung von einem Soll-Wert mindestens eine vorgeordnete Vorrichtung (6) betätigt, die wiederum imstande ist, die erfasste Abweichung zu reduzieren.

4. Vorrichtung nach einem der vorherigen Ansprüche, **dadurch gekennzeichnet, dass** die mindestens eine Führungseinrichtung (28) oberhalb und unterhalb der Wellpappe-Bahn (1, 4) angeordnet ist.

5. Vorrichtung nach einem der vorherigen Ansprüche, **dadurch gekennzeichnet, dass** die mindestens eine Führungseinrichtung (28) mindestens einen Führungstisch (29) zum Tragen der Wellpappe-Bahn (1, 4) umfasst.

6. Vorrichtung nach Anspruch 5, **dadurch gekennzeichnet, dass** die mindestens eine Führungswalze (28) und der mindestens eine Führungstisch (29) benachbart zueinander angeordnet sind und den Führungsspalt begrenzen, den die Wellpappe-Bahn (1, 4) durchtritt.

7. Vorrichtung nach einem der vorherigen Ansprüche, **dadurch gekennzeichnet, dass** sich das mindestens eine Kalibrierteil (30) quer zu der Transportrichtung (12) der Wellpappe-Bahn (1, 4) erstreckt.

8. Vorrichtung nach einem der vorherigen Ansprüche, **dadurch gekennzeichnet, dass** die Kalibrierkurve als Basis für eine nachfolgende Qualitäts-Bestimmung der Wellpappe-Bahn (1, 4) dient.

9. Vorrichtung nach einem der vorherigen Ansprüche, **dadurch gekennzeichnet, dass** die Kalibrieranordnung mindestens ein Messungs-Referenzelement (56, 58) umfasst.

10. Anlage zur Herstellung einer mindestens einseitig kaschierten Wellpappe-Bahn (1, 4), umfassend
a) mindestens eine Vorrichtung zur Herstellung einer einseitig kaschierten Wellpappe-Bahn (1, 4), und
b) mindestens eine der Vorrichtung zur Herstellung der einseitig kaschierten Wellpappe-Bahn (1, 4) nachgeordnete Vorrichtung (14) nach einem der vorherigen Ansprüche.

## Claims

1. Device for determining the quality of a moving corrugated board web (1, 4) with at least one cover web (3, 5) and at least one corrugated web (2), comprising
a) a quality determination sensor arrangement, comprising
i) a first quality determination sensor unit (15) facing a first side of the corrugated board web (1, 4), for determining the quality of the corrugated board web (1, 4) on its first side, and
ii) a second quality determination sensor unit (16) facing a second side of the corrugated board web (1, 4) opposite the first side of the corrugated board web (1, 4), for determining the quality of the corrugated board web (1, 4) on its second side,
b) an evaluation unit (19), which
i) is in signal connection with the quality determination sensor arrangement, and
ii) evaluates signals of the quality determination sensor arrangement with regard to the quality of the corrugated board web (1, 4), and
c) at least one guide means (28) for guiding the corrugated board web (1, 4) arranged adjacent to the quality determination sensor arrangement and allocated to the corrugated board web (1, 4),
i) wherein the at least one guide means (28) comprises at least one guide roller that is in contact with the corrugated board web (1, 4) for guiding the same,
**characterized in that**
d) a guide gap of the at least one guide means (28) is changeable,
e) the at least one guide roller (28) is set obliquely in relation to the corrugated board web (1, 4),
f) the device comprises a calibration arrangement for calibrating the quality determination sensor arrangement,
g) at least one calibration part (30) of the calibration arrangement is arranged at the second quality determination sensor unit (16) for reflecting a first measuring beam (33) of the first quality determination sensor unit (15) back to the first quality determination sensor unit (15) in the absence of a corrugated board web (1, 4),
h) the first quality determination sensor unit (15) and the second quality determination sensor unit (16) are active during a calibration, wherein the first measuring beam (33) impacts upon the at least one calibration part (30) and the evaluation unit (19) generates a calibration curve by means of the first and/or second quality determination sensor unit (15 or 16),
i) the first quality determination sensor unit (15) and second quality determination sensor unit (16) are arranged a little offset from each other in a transport direction (12) of the corrugated board web (1, 4),
i) the first quality determination sensor unit (15) and the second quality determination sensor unit (16) are arranged a little offset from each other, transverse to a transport direction (12) of the corrugated board web (1, 4), during a calibration process.

2. Device according to claim 1, **characterised in that** the evaluation unit (19) is capable of determining a smoothness of the corrugated board web (1, 4) on its first and/or second side, at least in some areas, for determining the quality of the corrugated board web (1, 4).

3. Device according to claim 1 or 2, **characterised in that** the evaluation unit (19) actuates at least one upstream device (6) in dependence on a detected deviation from a target value, wherein the at least one upstream device (6) is in turn capable of reducing the detected deviation.

4. Device according to one of the preceding claims, **characterised in that** the at least one guide means (28) is arranged above and below the corrugated board web (1, 4).

5. Device according to one of the preceding claims, **characterised in that** the at least one guide means (28) comprises at least one guide table (29) for supporting the corrugated board web (1, 4).

6. Device according to claim 5, **characterised in that** the at least one guide roller (28) and the at least one guide table (29) are arranged adjacent to each other and delimit the guide gap, through which the corrugated board web (1, 4) passes.

7. Device according to one of the preceding claims, **characterised in that** the at least one calibration part (30) extends transverse to the transport direction (12) of the corrugated board web (1, 4).

8. Device according to one of the preceding claims, **characterised in that** the calibration curve serves as a basis for a subsequent quality determination of the corrugated board web (1, 4).

9. Device according to one of the preceding claims, **characterised in that** the calibration arrangement comprises at least one measuring reference element (56, 58).

10. Plant for producing a corrugated board web (1, 4) laminated on at least one side, comprising
a) at least one device for producing a corrugated board web (1, 4) laminated on one side, and
b) at least one device (14) according to one of the preceding claims, located after the device for producing the corrugated board web (1, 4) laminated on one side.

## Revendications

1. Dispositif de détermination de la qualité d'une bande de carton ondulé (1, 4) en mouvement et qui comporte au moins une bande de revêtement (3,5) et au moins une bande ondulée (2), comprenant
a) un agencement de capteurs de détermination de la qualité, qui comporte
i) une première unité de capteur de détermination de qualité (15) dirigée vers un premier côté de la bande de carton ondulé (1, 4) pour déterminer la qualité de la bande de carton ondulé (1, 4) sur son premier côté, et
ii) une seconde unité de capteur de détermination de qualité (16) dirigée vers un second côté de la bande de carton ondulé (1, 4) opposé au premier côté de la bande de carton ondulé (1, 4) pour la détermination de la qualité de la bande de carton ondulé (1, 4) à son second côté,
b) une unité d'évaluation (19), qui
i) est en liaison de signal avec l'agencement de capteurs de détermination de la qualité, et
ii) évalue des signaux de l'agencement de capteurs de détermination de la qualité en ce qui concerne la qualité de la bande de carton ondulé (1, 4), et
c) au moins une installation de guidage (28) agencée à proximité de l'agencement de capteurs de détermination de qualité et associée à la bande de carton ondulé (1, 4) pour le guidage de la bande de carton ondulé (1, 4),
i) l'au moins une installation de guidage (28) comprenant au moins un cylindre de guidage se trouvant en contact avec la bande de carton ondulé (1, 4) pour le guidage de celle-ci,
**caractérisé en ce que**
d) un interstice de guidage de l'au moins une installation de guidage (28) est variable,
e) l'au moins un cylindre de guidage (28) est disposé de manière oblique par rapport à la bande de carton ondulé (1, 4),
f) le dispositif comprend un agencement d'étalonnage pour l'étalonnage de l'agencement de capteurs de détermination de la qualité,
g) au moins une partie d'étalonnage (30) de l'agencement d'étalonnage est agencée pour la réflexion d'un premier faisceau de mesure (33) de la première unité de capteur de détermination de qualité (15) en retour vers la première unité de capteur de détermination de qualité (15) en cas d'absence de bande de carton ondulé (1, 4) au niveau de la seconde unité de capteur de détermination de qualité (16),
h) la première unité de capteur de détermination de qualité (15) et la seconde unité de capteur de détermination de qualité (16) sont actives en cas d'étalonnage, le premier faisceau de mesure (33) rencontrant l'au moins une partie d'étalonnage (30) et l'unité d'évaluation (19) générant une courbe d'étalonnage au moyen de la première et/ou de la seconde unité de capteur de détermination de qualité (15 ou 16),
i) la première unité de capteur de détermination de qualité (15) et la seconde unité de capteur de détermination de qualité (16) sont agencées de manière légèrement décalée l'une par rapport à l'autre dans une direction de transport (12) de la bande de carton ondulé (1, 4), et
j) la première unité de capteur de détermination de qualité (15) et la seconde unité de capteur de détermination de qualité (16), lors d'un processus d'étalonnage, sont agencées de manière légèrement décalée l'une par rapport à l'autre transversalement à un dispositif de transport (12) de la bande de carton ondulé (1, 4).

2. Dispositif selon la revendication 1, **caractérisé en ce que** l'unité d'évaluation (19) est en mesure de déterminer, au moins partiellement, une planéité de la bande de carton ondulé (1, 4) au niveau de son premier et/ou de son second côté pour déterminer la qualité de la bande de carton ondulé (1, 4).

3. Dispositif selon les revendications 1 ou 2, **caractérisé en ce que** l'unité d'évaluation (19) actionne au moins un dispositif (6) disposé en amont en fonction d'un écart détecté d'une valeur de consigne, lequel dispositif est à son tour en mesure de réduire l'écart détecté.

4. Dispositif selon l'une des revendications précédentes, **caractérisé en ce que** l'au moins une installation de guidage (28) est agencée au-dessus et en-dessous de la bande de carton ondulé (1, 4).

5. Dispositif selon l'une des revendications précédentes, **caractérisé en ce que** l'au moins une installation de guidage (28) comprend au moins une table de guidage (29) servant à porter la bande de carton ondulé (1, 4).

6. Dispositif selon la revendication 5, **caractérisé en ce que** l'au moins un cylindre de guidage (28) et l'au moins une table de guidage (29) sont agencés à proximité l'un de l'autre et limitent la fente de guidage que la bande de carton ondulé (1, 4) traverse.

7. Dispositif selon l'une des revendications précédentes, **caractérisé en ce que** l'au moins une partie d'étalonnage (30) s'étend transversalement à la direction de transport (12) de la bande de carton ondulé (1, 4).

8. Dispositif selon l'une des revendications précédentes, **caractérisé en ce que** la courbe d'étalonnage sert de base pour une prochaine détermination de qualité de la bande de carton ondulé (1, 4).

9. Dispositif selon l'une des revendications précédentes, **caractérisé en ce que** l'agencement d'étalonnage comprend au moins un élément de référence de mesure (56, 58).

10. Equipement pour la production d'une bande de carton ondulé (1, 4) laminée au moins d'un côté, comprenant
a) au moins un dispositif pour la production d'une bande de carton ondulé (1, 4) laminée d'un côté, et
b) au moins un dispositif (14) selon l'une des revendications précédentes disposé en aval du dispositif pour la production de la bande de carton ondulé (1, 4) laminée d'un côté.
